# EUROPEAN PATENT SPECIFICATION

(11) **EP 4 467 973 B1**
(45) Date of publication and mention of the grant of the patent: **23.04.2025**
(21) Application number: 24175809.3
(22) Date of filing: 14.05.2024
(51) Int. Cl.: G01N 27/30

(54) **RENEWABLE PASTE ELECTRODE BODY FOR SIMULTANEOUS AVERAGING MEASUREMENTS**
ELEKTRODENKÖRPER AUS ERNEUERBARER PASTE FÜR GLEICHZEITIGE MITTELWERTMESSUNGEN
CORPS D'ÉLECTRODE EN PÂTE RENOUVELABLE POUR DES MESURES SIMULTANÉES DE LA MOYENNE

(30) Priority: 26.05.2023 PL 44500823
(43) Date of publication of application: 27.11.2024
(73) Proprietor: Uniwersytet Lodzki, 90-136 Lodz (PL)
(72) Inventor: Smarzewska, Sylwia, 94-058 Lodz (PL)
(74) Representative: Kicinska-Fujawa, Alicja

(56) References cited:
- WO-A1-2023/286864
- JÖRGEN LINDQUIST: "A new carbon paste electrode holder and a simple method for preparing reproducible electrode surfaces", 18 January 1968 (1968-01-18), J. Electroanal. Chem., pages 204 - 205, XP093217231, Retrieved from the Internet <URL:https://www.sciencedirect.com/science/article/pii/S0022072868801792?via%3Dihub> DOI: 10.1016/s0022-0728(68)80179-2

## Description

The subject matter of an invention is a renewable paste electrode body for averaged simultaneous measurements for use in electrochemical measurements.

### Background Art

In modern electrochemical measurements, especially polarographic, amperometric and voltammetric, a three-electrode measuring system is used. Its most important element is the working electrode, which controls the measurement process with its small size, i.e., it limits the amount of charge or the intensity of the current flowing or the number of exchanged electrons during measurements. One of the working electrodes types used is the paste electrode. A common feature of working electrodes is that, on the one hand, an electrical contact is made for connection in an electrical circuit with the remaining elements of the measuring system and the elements controlling it. On the other hand, through the surface of the working material, in this case the paste, contact occurs with a conductive solution, the electrolyte, which is another element of the measuring system and guarantees the continuity of the electrical circuit through the contact with the remaining electrodes.

In measurements, working electrode bodies containing a portion of conductive paste are used, organized in a way that allows only a single contact surface with the electrolyte solution. The composition of the paste can be varied, adjusted to the requirements of particular analysis, but it must always be well conductive and not reactive with the analyte being tested, as well as insoluble in the supporting electrolyte solution. Typically, the conductive paste is made of carbon, e.g. powdered graphite, and a binder, e.g. paraffin oil, silicone oil, etc. The paste is mixed and then placed in the electrode body. The electrode prepared this way is used to measure electrochemical physicochemical phenomena occurring in the close vicinity of the electrode surface. After each measurement, the surface of the paste needs to be refreshed. The renewal procedure depends on the type of body used.

The Czech patent application no. CZ20023939A3 describes a body in which the paste is renewed by squeezing out a specific portion of it with a micrometric screw, removing the excess and smoothing the surface, e.g. on wet filter paper. A similar carbon paste electrode holder is described in the publication of J. Lindquist: "A new carbon paste electrode holder and a simple method for preparing reproducible electrode surfaces", J. Electroanal. Chem. (1968-01-18), pages 204-205. The renewal procedure is a mechanical operation.

Its effectiveness and repeatability depend primarily on the experience and level of manual skills of the preparer, making it relatively difficult to achieve statistically consistent measurement results. WO 2023/286864 A1 describes a body having a plurality of conductive rods placed in an insulating body and connected to an electric circuit.

Mercury electrodes and their smooth surface are considered to be perfectly repeatable. In case of mercury electrodes, the measurement is conducted on an almost perfectly repeatable and reproducible droplet of mercury, especially under electromechanical generation conditions. In other cases, such as for disk electrodes with working material made of solids (e.g. metals, carbon), as well as for paste electrodes, the repeatability of the measurement can be problematic. This is because the standard measurement error is accompanied by the above-mentioned issue of mechanical refreshment and reproduction of the identical surface, including the microscopic cross-section and considering the actual electroactive surface. Even with correct electrochemical measurements, in accordance with Good Laboratory Practice (GLP), the repeatability of paste electrodes is at the level of 10-15%.

### Summary of Invention

The essence of the renewable paste electrode body for averaged simultaneous measurements according to the invention is that it consists of four components: sleeve made of chemically resistant material, cylindrical electrode carrier made of stainless steel, cylindrical electrode carrier rods made of stainless steel - each with one threaded end, and housing made of chemically resistant material. The sleeve has a hole on one side that matches the diameter of the wider part of the electrode carrier. On the other side it also has a hole that matches the electric contact diameter of the electrode carrier, ensuring chemical inertness and electrical insulation during handling and the refreshing process. Alternately, the electrode carrier is machined in such a way that one end is narrower, serving as an electrical contact connecting the electrode with the potentiostat/electrical circuit, while the other end is wider and has threaded holes underneath into which the electrode carrier rods are screwed. The housing of the body is drilled to precisely match the distribution and diameter of the electrode carrier rods mounted in the electrode carrier.

### Benefits of the Invention

The main advantage of the paste electrode body according to the invention is that it utilizes a multi-surface body, enabling averaged results to be obtained from a single experimental measurement. Due to the use of a multiplied surface of the working electrode, it is possible to obtain n measurements during a single measurement, provided that n paste electrodes are used in the proposed body. This leads to more consistent and repeatable results with lower experimental error. Additionally, it results in lower consumption of reagents, consumables, electricity and time.

An additional advantage is that all working surfaces are renovated simultaneously, preventing accidental errors that can impact the quality of electrochemical measurements. The solution offers an alternative, ecologically friendly approach of conducting multiple measurements, which is particularly important during optimization or analytical research.

### Brief Description of Drawings

The invention is illustrated in embodiment and figures, where:

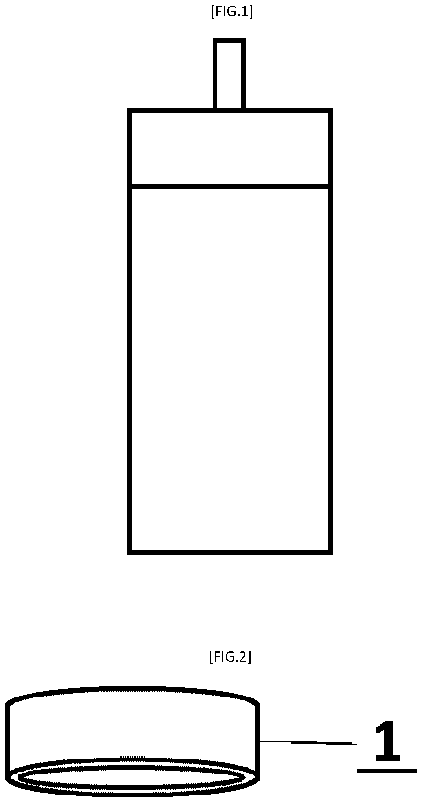

[Fig. 1] shows a side view of the paste electrode body as assembled.
[Fig. 2] shows a sleeve made of chemically resistant material.

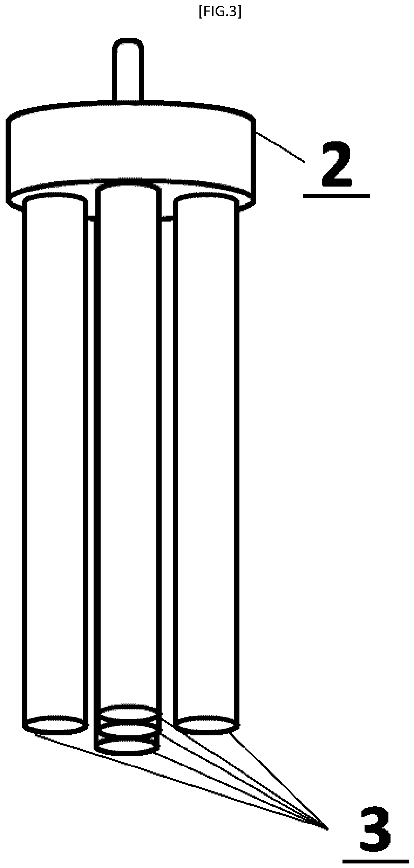

[Fig. 3] shows a conductive electrode carrier with electrode support rods screwed into it.

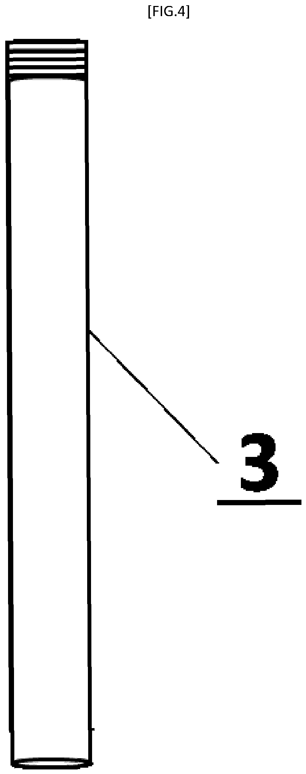

[Fig. 4] shows a single electrode carrier rod.

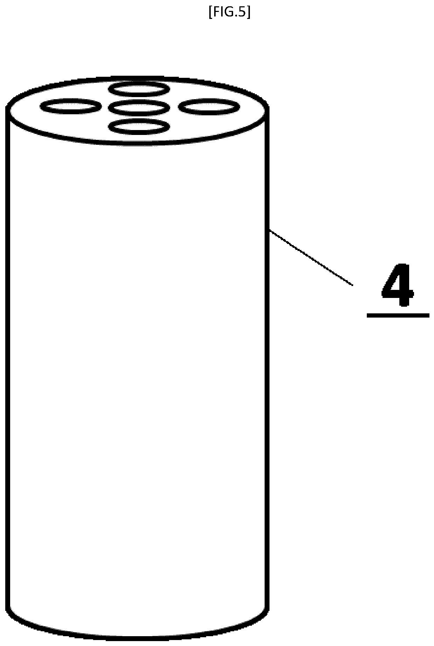

[Fig. 5] shows a chemically resistant material enclosure.

### Description of Embodiments

The body of the paste electrode for averaged simultaneous measurements consists of sleeve 1 made of chemically resistant material, cylindrical electrode carrier 2 made of stainless steel, electrode carrier 3 rods made of stainless steel with a threaded one end and housing 4 made of chemically resistant material. Sleeve 1 has a hole on one side that matches the diameter of the wider part of the electrode carrier 2 and on the other side a hole that matches the contact diameter of the electrode carrier 2 to ensure chemical inertness and electrical insulation during handling and the refreshing process. Electrode carrier 2 is machined in such a way that one end is narrower, serving as an electrical contact connecting the electrode with the potentiostat/electrical circuit. The opposite end is wider and has five threaded holes underneath, designed to perfectly accommodate the rods of electrode carrier 3 when screwed in. Housing 4 is drilled in such a way that it perfectly matches the distribution and diameter of the electrode carrier 3 mounted in the electrode carrier 2.

The principle of operation of the paste electrode body is that when it is connected to the electrical circuit and potentiostat and placed in the vessel with the electrolyte containing the test object, the measurements are simultaneously conducted on all surfaces of the paste electrodes. This is achieved by filling the body with paste in the space occupied by the electrode carrier rods. Due to individual differences in the structure of conductive materials, each of the working surfaces acts as a separate sensor without the influence of electrolytic processes on the surface of the other electrodes. In this way, the measurement result is obtained as the sum of currents from independent working surfaces, or alternatively, as obtained in subsequent measurement series. The resulting measurement outcome is divided by the number of working surfaces used so to obtain an averaged value.

After the measurement, in order to renew the surface, it is enough to press the conductive-push element formed after the connection of the electrode carrier 2, the electrode carrier rods 3 and the sleeve 1, which will cause the used paste to slide out of the housing body. It is necessary to remove the excess paste and smooth the surfaces of all electrodes again using wet filter paper. The renewal procedure can be repeated many times until the paste is depleted.

## Claims

1. The body of a renewable paste electrode for averaged simultaneous measurements, **characterized by** consisting of a sleeve (1) made of chemically resistant material, an electrode carrier (2) cylindrical made of stainless steel, electrode carrier rods (3) in the shape of a cylinder made of stainless steel with a threaded one end, and a housing (4) made of chemically resistant material, with the sleeve (1) having a hole on one side adapted to the wider diameter parts of the electrode carrier (2), and on the opposite one having a hole matched to the contact diameter of the electrode carrier (2), which ensures chemical inertness and electrical insulation during handling and refreshment, while the electrode carrier (2) is machined in such a way that it has one narrower end, serving as an electrical contact connecting the electrode with the potentiostat/electrical circuit, and the other, wider end has five threaded holes underneath, allowing the electrode carrier rods (3) to be screwed in securely, and the housing (4) is drilled in such a way that it perfectly matches the distribution and diameter of the electrode carrier rods (3) mounted in the electrode carrier (2).

## Patentansprüche

1. Der Körper einer erneuerbaren Pasten-Elektrode für gemittelte Simultanmessungen, **gekennzeichnet dadurch, dass** er aus einer aus chemisch beständigem Material ausgeführten Hülse (1), einem zylindrischen aus rostfreiem Stahl ausgeführten Elektrodenträger (2), Elektrodenträgerstäben (3) in zylindrischer Form aus rostfreiem Stahl mit Gewinde an einem Ende und einem aus chemisch beständigem Material ausgeführten Gehäuse (4) besteht, wobei die Hülse (1) auf einer Seite eine Bohrung aufweist, die an die Teile mit dem größeren Durchmesser des Elektrodenträgers (2) angepasst ist, und auf der gegenüberliegenden Seite eine Bohrung, die an den Kontaktdurchmesser des Elektrodenträgers (2) angepasst ist, was die chemische Reaktionsträgheit und die elektrische Isolierung während der Handhabung und Erneuerung gewährleistet, während der Elektrodenträger (2) so ausgeführt ist, dass er ein schmaleres Ende aufweist, das als elektrischer Kontakt dient, der die Elektrode mit dem Potentiostat/Stromkreis verbindet, und das andere, breitere Ende, das darunter fünf Bohrungen mit Gewinde aufweist, in die die Elektrodenträgerstäbe (3) sicher eingeschraubt werden können, sowie das Gehäuse (4), das so angebohrt ist, dass es perfekt zur Verteilung und zum Durchmesser der Elektrodenträgerstäbe (3) passt, die im Elektrodenträger montiert sind (2).

## Revendications

1. Corps d'une électrode à pâte renouvelable pour mesures simultanées moyennées, **caractérisé en ce qu'**il est constitué d'un manchon (1) en matériau présentant une résistance chimique, d'un support (2) d'électrode cylindrique en acier inoxydable, de tiges de support (3) d'électrode en forme de cylindre en acier inoxydable avec une extrémité filetée, et d'un boîtier (4) en matériau chimiquement résistant, le manchon (1) présentant d'un côté une ouverture adaptée aux parties de plus grand diamètre du support (2) d'électrode, et de l'autre côté une ouverture adaptée au diamètre de contact du support (2) d'électrode, ce qui garantit l'inertie chimique et l'isolation électrique pendant la manipulation et le rafraîchissement, tandis que le support (2) d'électrode est usiné de telle manière qu'il présente une extrémité plus étroite, servant de contact électrique reliant l'électrode au potentiostat/circuit électrique, et l'autre extrémité plus large présente cinq ouvertures filetéss en dessous, permettant de visser solidement les tiges de support (3) d'électrode, et le boîtier (4) est percé de telle manière qu'il corresponde parfaitement à la distribution et au diamètre des tiges de support (3) d'électrode montées dans le support (2) d'électrode.
